# EUROPEAN PATENT APPLICATION

(11) **EP 2 408 092 A2**
(43) Date of publication of application: **18.01.2012**
(21) Application number: 10187627.4
(22) Date of filing: 14.10.2010
(51) Int. Cl.: H02K 53/00, H02K 16/02, H02K 51/00

(54) **Energy conversion machine**

(30) Priority: 15.07.2010 TR 201005830 U
(71) Applicant: AVCI, Mümin, Istanbul (TR)
(72) Inventor: AVCI, Mümin, Istanbul (TR)
(74) Representative: Iskender, Ibrahim

(57) **Abstract**

The invention is the externally actuated electrical energy production mechanism comprising: a pulley (200) providing transmission of mechanical energy, which is given by an engine, to the system; a connection shaft (700), in which ball bearings (420, 520) are embedded; first ball bearing (420) providing rotation of said shaft (700) independent from an inner body (300); magnetic wings (600), which provide rotation of the connection shaft (700), and which are connected with the connection shaft (700); an inner body (300) comprising inner body poles (320) and interaction spaces (310); a front cover (400), on which said inner body (300) is positioned; a rear cover (500), on which said inner body (300) is positioned; outer body poles (810) having opposite direction with magnetic wing poles (610); and a second ball bearing (520) providing rotation of the connection shaft (700) independent from the inner body (300).

## Description

### The Related Art

The invention relates to the mechanism, which produces electricity from electrical energy by being actuated externally.

### Background of the Invention

Energy sources of the earth are limited and some energy sources are produced with more expensive investments and various environmental risks.

Only 30-40% of the energy produced in the thermal power plants can be converted into electrical energy; while the remaining part is named as "lost energy" and it is released with radiation from the boiler or emitted with the stack gas from the stack. One of the most important environmental impacts of the thermal power plants is related to cooling water and thermal power plants need great amounts of cooling water. Therefore, thermal power plants are generally established near river, lake, sea etc. places where cooling water can be used. Discharging of the wastes into the sea or scattering on land is an irresponsible waste method which has been used for a long time. Minimizing the waste heat discharges into seas, rivers, and lakes and thus preventing thermal pollution sources which endanger the biological life in seas have entered into agreements at international level.

The combustion products of petroleum, coal etc. fossil fuels are carbondioxide. By giving large amounts of carbondioxide to the atmosphere, they form the greenhouse effect. The greenhouse effect causes warming of the earth and leads to global warming. Glaciers melt, some animal and plant species become extinct and thus a chain of problems occur.

As a result, due to the above said problems and the inadequacy of the present solutions, improvement is necessary in the related technical field.

### Description of the Invention

The purpose of the invention is to form a mechanism providing electricity production from electrical energy.

Another purpose of the invention is to minimize the negative effects and environmental impacts of the known energy source types.

Another purpose of the invention is to provide an externally actuated electrical energy production mechanism transmitting the electrical energy it takes from the electric engine, which is used as an external actuation mechanism, into the mechanism via belt and pulley.

Another purpose of the invention is to provide obtaining more power at the output of the mechanism by increasing the numbers of revolution of the pulleys.

The structural and characteristic features of the invention and all advantages will be understood better in detailed descriptions with the figures given below and with reference to the figures, and therefore, the assessment should be made taking into account the said figures and detailed explanations.

### Figures for Better Understanding of the Invention

Figure 1a - is the front view of the magnetic wings (600), first ball bearing (420), pulley (200), and connection shaft (700), in which they are positioned inside the externally actuated electrical energy production mechanism.
Figure 1b - is the side view of the magnetic wings (600), first ball bearing (420), pulley (200), and connection shaft (700), in which they are positioned inside the externally actuated electrical energy production mechanism.
Figure 1c - is the perspective view of the magnetic wings (600), first ball bearing (420), pulley (200), and connection shaft (700), in which they are positioned inside the externally actuated electrical energy production mechanism.
Figure 1d - is the section view of the magnetic wings (600), first ball bearing (420), pulley (200), and connection shaft (700), in which they are positioned inside the externally actuated electrical energy production mechanism.
Figure 2a - is the front view of the first ball bearing (420), in which it is mounted to the pulley (600).
Figure 2b - is the side view of the first ball bearing (420), in which it is mounted to the pulley (600).
Figure 2c - is a rear perspective view of the first ball bearing (420), in which it is mounted to the pulley (600).
Figure 2d - is a front perspective view of the first ball bearing (420), in which it is mounted to the pulley (600).
Figure 3a - is the front view of the inner body (300).
Figure 3b - is the side view of the inner body (300).
Figure 3c - is another side view of the inner body (300).
Figure 3d - is a perspective view of the inner body (300).
Figure 4a - is the front view of the pulley (200) and first ball bearing (420), in which they are mounted on the front cover (400).
Figure 4b - is the side view of the pulley (200) and first ball bearing (420), in which they are mounted on the front cover (400).
Figure 4c - is a perspective view of the pulley (200) and first ball bearing (420), in which they are mounted on the front cover (400).
Figure 5a - is the front view of the second ball bearing (520), in which it is mounted at the rear cover (500).
Figure 5b - is the side view of the second ball bearing (520), in which it is mounted at the rear cover (500).
Figure 5c - is a perspective view of the second ball bearing (520), in which it is mounted at the rear cover (500).
Figure 6a - is the side view of the magnetic wing (600).
Figure 6b - is another side view of the magnetic wing (600).
Figure 6c - is the top view of the magnetic wing (600).
Figure 6d - is a perspective view of the magnetic wing (600).
Figure 7a - is the front view of the connection shaft (700).
Figure 7b - is the side view of the connection shaft (700).
Figure 7c - is a front perspective view of the connection shaft (700).
Figure 7d - is a rear perspective view of the connection shaft (700).
Figure 8 - is a perspective view of the outer body (800).

### Parts Numbers

200. Pulley
210. Pulley inner surface
220. Connection space

300. Inner body
310. Interaction space
320. Inner body poles
330. Inner surface

400. Front cover
410. Front cover space
420. First ball bearing
421. Outer surface
430. Front connection space

500. Rear cover
510. Rear cover space
520. Second ball bearing
530. Rear connection space

600. Magnetic wings
610. Magnetic wing poles
620. Weight tool
630. Connection surface

700. Connection shaft
710. Shaft surface
720. Connection component
721. Upper surface
730. Support component
740. Connection surface
800. Outer body
810. Outer body poles

N. Positive pole
S. Negative pole

### Detailed Description of the Invention

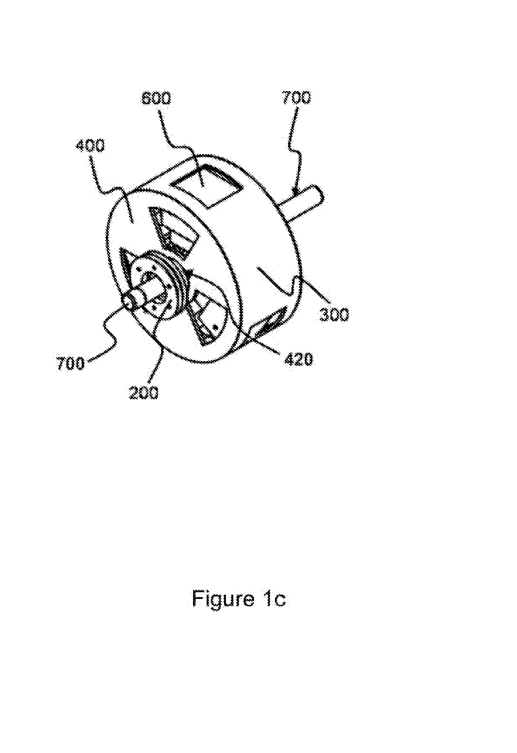

In Figure 1c, the perspective view of the magnetic wings (600), first ball bearing (420), pulley (200), and connection shaft (700) are given while they are positioned inside the externally actuated electrical energy production mechanism.

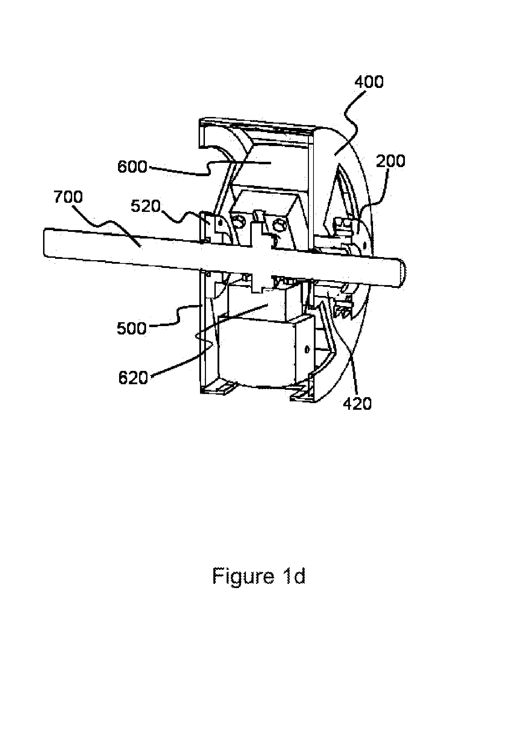

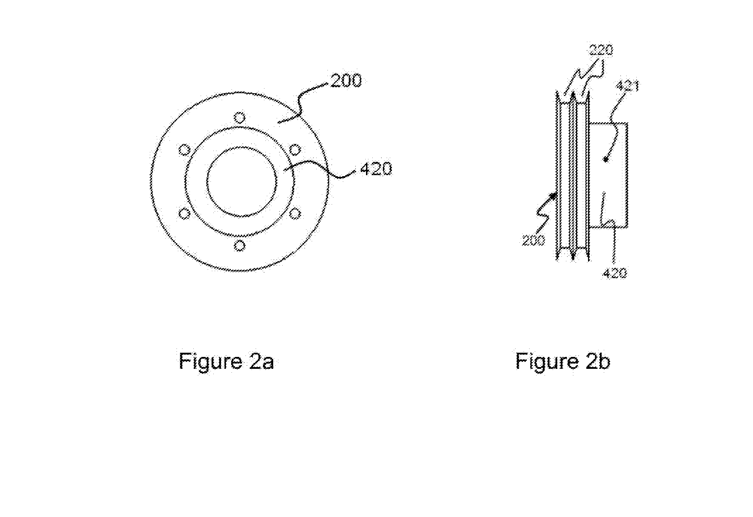

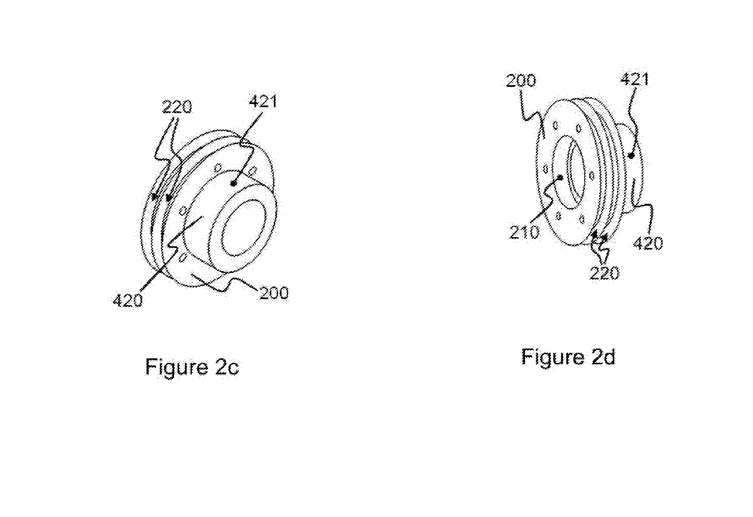

In Figure 2c, a rear perspective view of the first ball bearing (420), in which it is mounted to the pulley (600), is given. At the outer region of the pulley (200), it has connection spaces (220) providing connection the pulley (200) with the belts, which provide rotation of the pulleys (200) (Figure 2c). By placement of belts at the said spaces (220), the energy required for the first motion is transmitted from the electric engine to the externally actuated electrical energy production mechanism. The pulley inner surface (210) placed at the inner region of the pulley (200) and the outer surface (421) of the first ball bearing (420) are connected in a way that a certain space would left between the pulley (200) and the front cover (400) connected to the first ball bearing (420) (Figure 1c, Figure 1d).

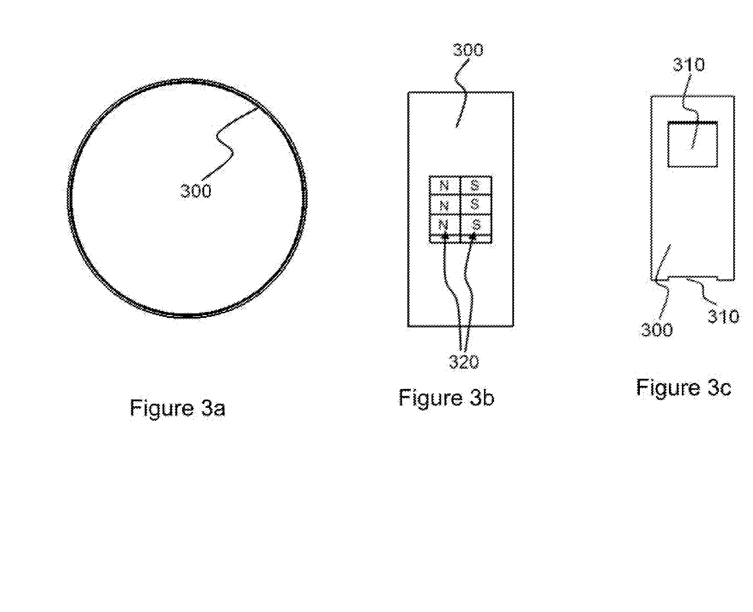

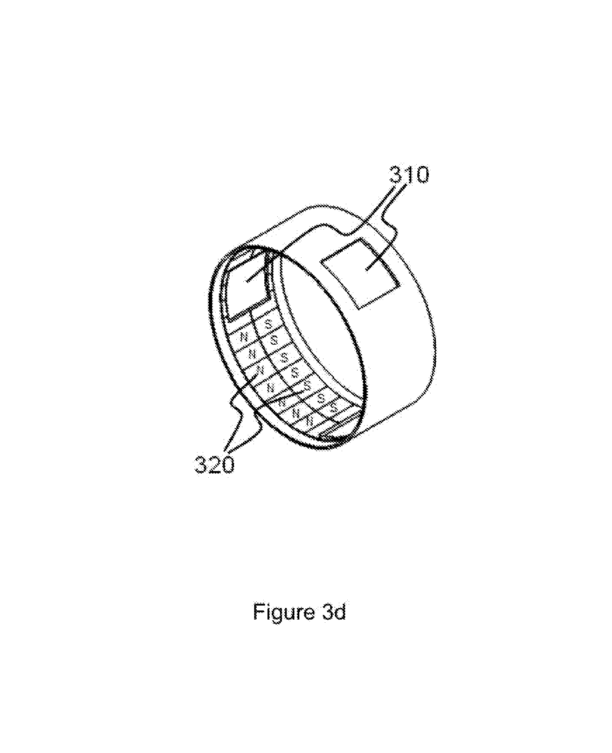

A perspective view of the inner body (300) is given in Figure 3d. Inner body (300) has a hollow cylindrical structure. On the inner body (300), there are interaction spaces (310), which provide confrontation of the magnetic wing poles (610) (figure 3b) placed on the magnetic wings (600) with the outer body poles (800) placed on the outer body (800). Inner body magnetic poles (320) are positioned on the inner surface (330) of the inner body (300). The inner body magnetic poles (320) are positioned in the same direction with the magnetic wing poles (610), which are positioned on the magnetic wings (600), and which are arranged side by side as N and S poles. Therefore, the N poles shown in figure 3 interact with the N poles, while the S poles interact with the S poles. As a result of this interaction, since the same magnetic poles repel each other, thus the inner body (300) and the magnetic wings (600) repel each other. The purpose of repelling of the inner body (300) via the magnetic wings (600) is to reduce the extra pressure formed on the ball bearings (420, 520) and thus prevent abrasion of the ball bearings (420, 520) (Figure 1d).

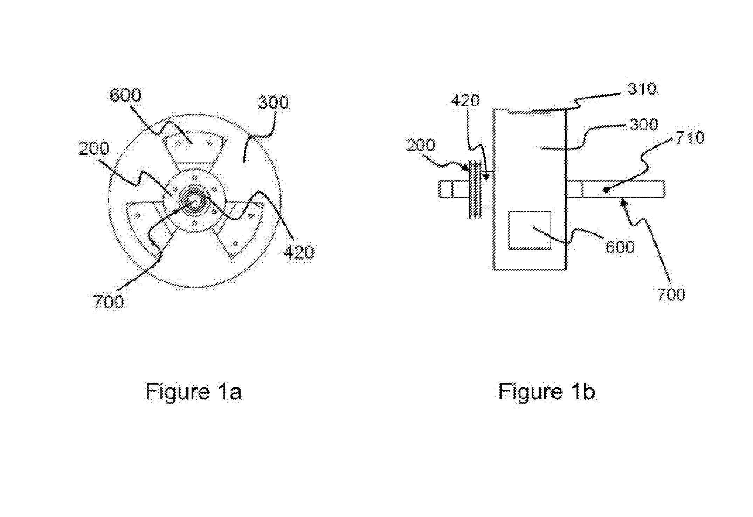

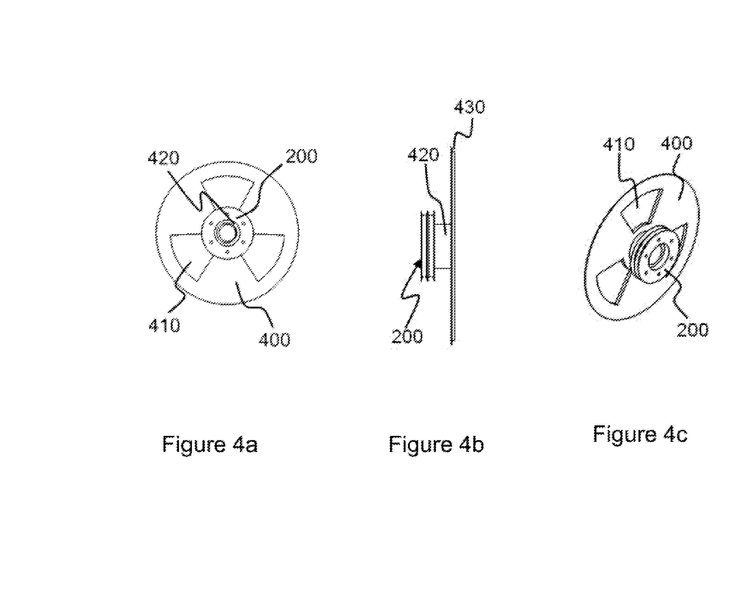

A perspective view of the front cover (400) is given in Figure 4c. First ball bearing (420) is positioned at the inner region of the front cover (400) (Figure 4b). The first ball bearing (420) provides continuing of the motion in the direction given at the beginning. The first ball bearing (420) is formed by engagement of an inner ring with an outer ring. In order to provide easy rotation of these rings within each other, a series of balls are placed as positioned at the inner part. Presence of the first ball bearing (420) in this structure, provides movement of the connection shaft (700), which is connected with the said ball bearing (420) (Figure 1 b), in an independent manner from the inner body (300) during rotation of the inner body (300). Said ball bearing (420) is connected with the connection shaft (700) on the inner surface. The front cover (400) has a structure in the form of two circular structures placed on top of each other, wherein one has smaller diameter than the other. On the front cover (400), front cover spaces (410) are placed in order to reduce the pressure that the front cover (400) would form on the first ball bearing (420). Front connection space (430) is placed at the outer region of the inner circular structure and on the outer circular structure. The inner body (300) is connected with the front cover (400) via the said space (430). The inner body (300) is connected with the front cover (400) via the said space (430) (Figure 1d).

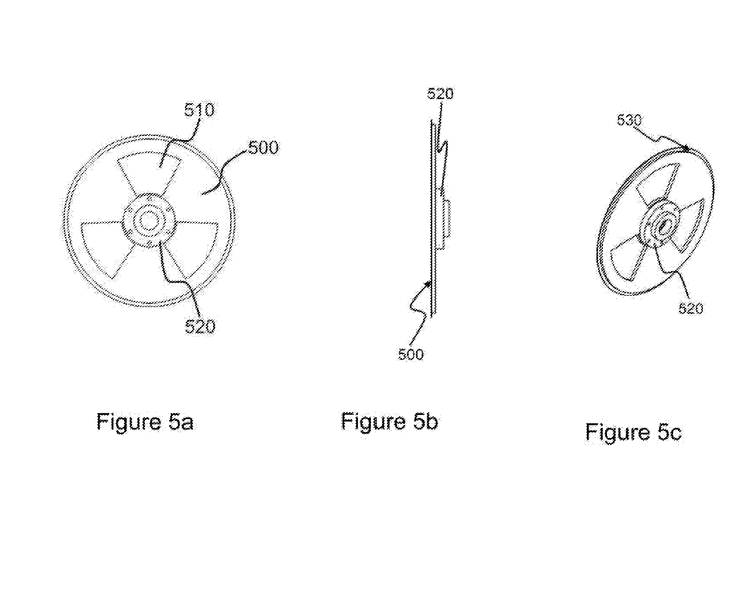

A perspective view of the rear cover (500) is given in Figure 5c. The second ball bearing (520) is positioned on the rear cover inner surface (540). The second ball bearing (520), like the first ball bearing (420), also provides the movement of the connection shaft (700) in an independent manner from the inner body (300). The said ball bearing (520) is connected with the connection shaft (700) on the inner surface. The rear cover (500) has a structure in the form of two circular structures placed on top of each other, wherein one has smaller diameter than the other (Figure 5b). On the rear cover (500), rear cover spaces (510) are placed in order to reduce the pressure that the rear cover (500) would form on the second ball bearing (520). Rear connection space (510) is placed at the outer region of the inner circular structure and on the outer circular structure. The inner body (300) is connected with the rear cover via this connection space (410) (Figure 1d).

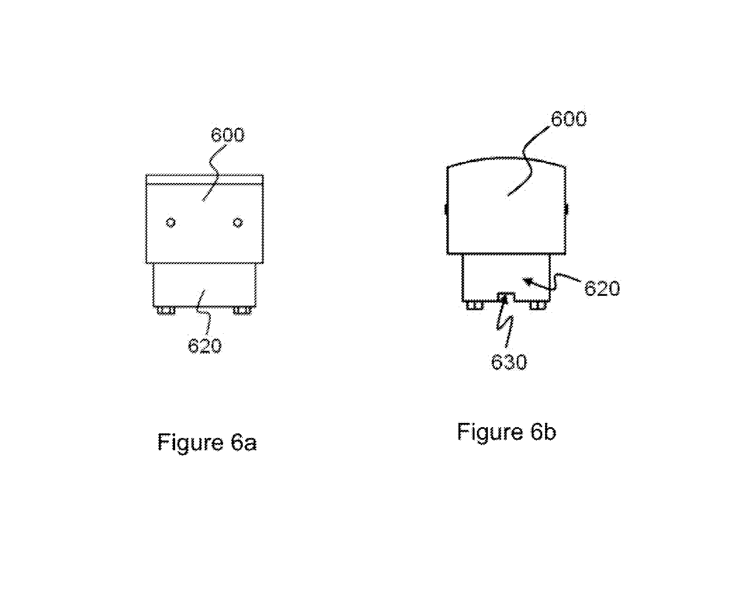

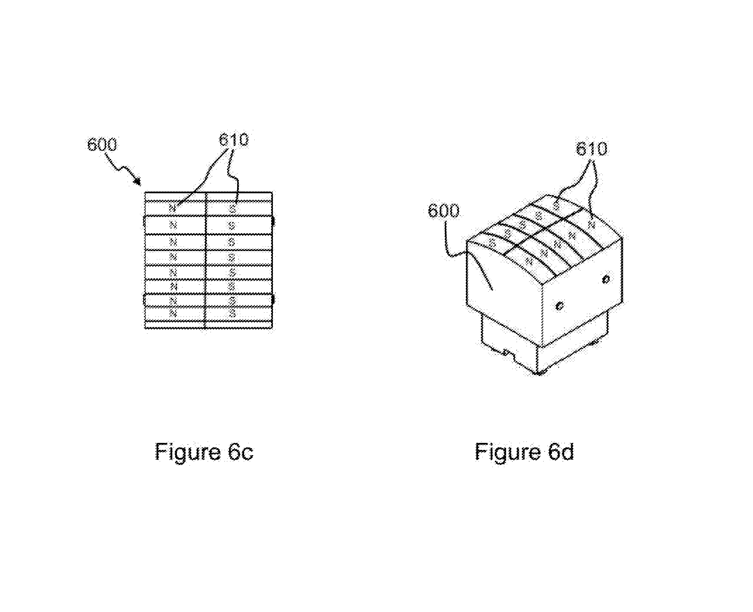

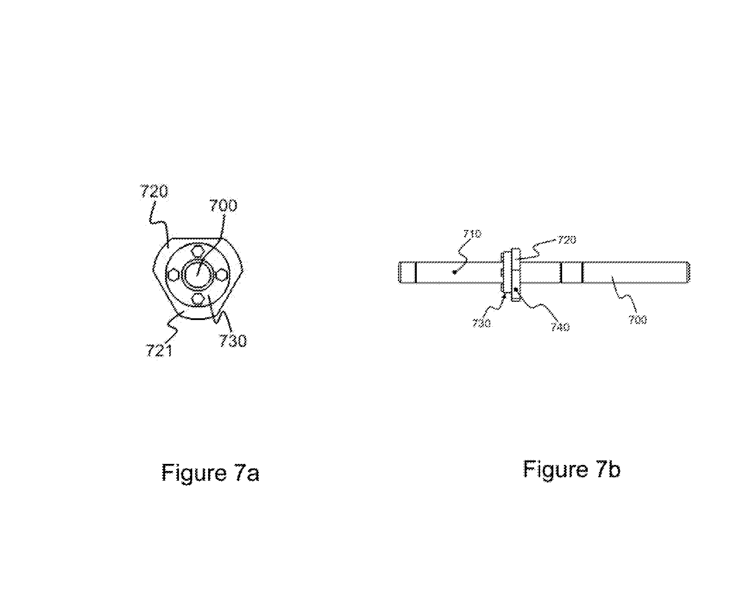

A perspective view of the magnetic wing (600) is given in Figure 6d. On the magnetic wing (600), the magnetic wing poles (610) are positioned, which are arranged side by side in the form of N and S poles. At the lower part of the magnetic wing (600), the weight tools (620) providing idleness are placed. The connection surfaces (630) placed at the lower part of the weight tools (620) provide connection of the magnetic wings (600) with the connection shaft (700). In this way, via rotation of the magnetic wings (600) with the magnetic field effect, the connection shaft (700) also rotates (Figure 7b).

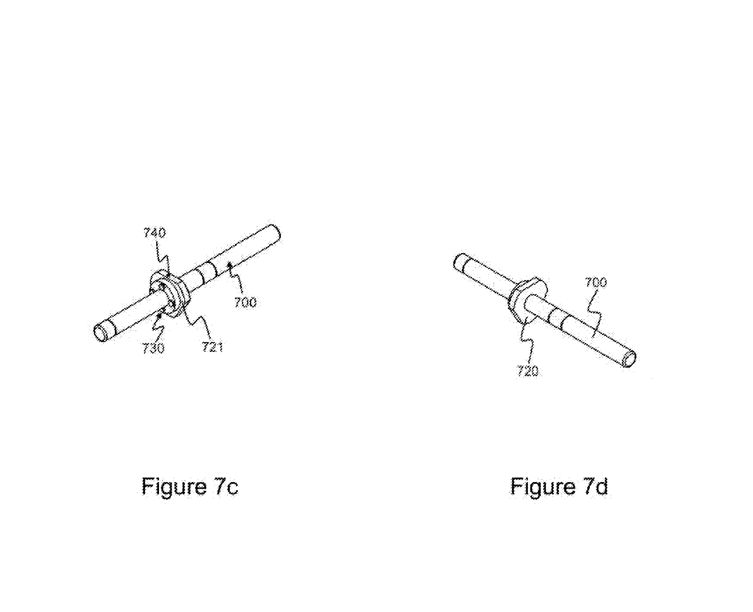

In Figure 7c, a perspective view of the connection shaft (700) is given. Connection shaft (700) has a cylindrical structure. The support component (730) having hollow circular structure and the connection component (720) are positioned on the surface (710) of the said shaft (700) (Figure 7a). The connection component (720) connection surface (740) has a flat structure having the same form with the connection surfaces (630) placed on the magnetic wings in order to be connected with the said connection surfaces (630) (Figure 7d). As a result of connection of the connection surface (740) and the connection surface (630), the magnetic wings (600) and the connection shaft (700) are provided to rotate at the same time and in the same direction. The support component (730) is positioned on the upper surface (721) of the connection component and it reduces the pressure that the weight tools (620) form on the connection component (720) (Figure 7b).

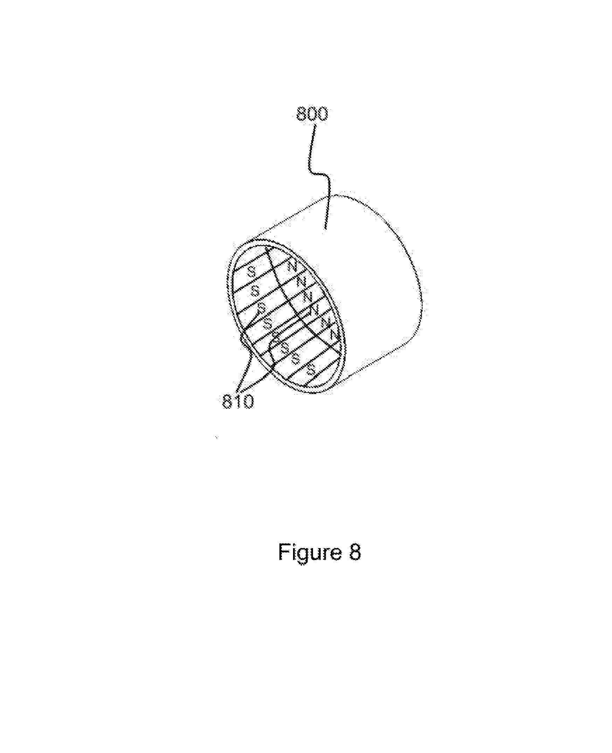

A perspective view of the outer body (800) is given in Figure 8. The outer body (800) is mounted on the main chassis and it is stable. Outer body poles (820) arranged in the form of N and S poles are placed on the outer body inner surface (810). The said poles (820) are arranged in a way that they are in opposite direction with the poles (610) placed on the magnetic wings (600). Arrangement of the outer body poles (810) in this way provide rotation of the magnetic wings (600) when encountered with the magnetic wing poles (610) via the interaction spaces (310).

The first motion of the mechanism can be provided electrically or pneumatically, or magnetically by solid or liquid fuel, or via solar energy.

*The way of operation of the externally actuated electrical energy production mechanism is as follows;* The first motion is given to the said mechanism via electric engine in which solid or liquid fuel is used. Rotation of the inner body (300) is ensured via belt and pulley (200). During rotation of the inner body (300), the magnetic wing poles (610) and the outer body poles (810) get into interaction via interaction spaces (310). During rotation of the inner body (300), the magnetic wing poles (610) and the outer body poles (810) repel each other. In this way, the magnetic wings (600), which are stable at the beginning, start to rotate via the said interaction. This interaction continues as long as the said poles (320, 810) see each other via the interaction spaces (310). With the rotation of the magnetic wings (600), the connection shaft (700), which is connected with the said wings (600), also starts to rotate. The number of revolutions of the pulleys (200) increases as a result of the said rotation operation occurring with the interaction of magnetic poles (320, 810). The number of revolutions of the connection shaft (700) is larger than the number of revolutions of the pulleys (200). In this way, more electrical energy is obtained on the connection shaft (700) than the electrical energy at the input.

## Claims

1. The invention is the externally actuated electrical energy production mechanism comprising pulley (200) providing transmission of the electrical energy, which is given by the electric engine, to the system; connection shaft (700), which provides obtaining of more power at the output than the input by increasing the number of revolutions, and in which the ball bearings (420, 520) are embedded; first ball bearing (420) providing rotation of the said shaft (700) independent from the inner body (300); magnetic wings (600), on which magnetic wing poles (610) are positioned, which provide rotation of the connection shaft (700), and which are connected with the connection shaft (700); inner body (300), on which the inner body poles (320) are positioned, and which comprise the interaction spaces (310); front cover (400), on which the said inner body (300) is positioned; rear cover (500), on which the said inner body (300) is positioned; outer body (800), on which the outer body poles (810) having opposite direction with the magnetic wing poles (610) are positioned; and the second ball bearing (520) providing rotation of the connection shaft (700) independent from the inner body (300).

2. Externally actuated electrical energy production mechanism according to Claim 1, and it is **characterized in that**; it comprises front cover space (410) providing positioning of the said inner body (300) on the front cover (400).

3. Externally actuated electrical energy production mechanism according to Claim 1, and it is **characterized in that**; it comprises rear cover space (510) providing positioning of the said inner body (300) on the rear cover (500).

4. Externally actuated electrical energy production mechanism according to Claim 1, and it is **characterized in that**; it comprises connection surfaces (630) providing connection of the said magnetic wings (600) with the connection shaft (700).

5. Externally actuated electrical energy production mechanism according to Claim 1, and it is **characterized in that**; it comprises connection component (720) formed on the connection shaft (700) and providing connection of the said connection shaft (700) with the magnetic wings (600).

6. Externally actuated electrical energy production mechanism according to any one of the above claims, and it is **characterized in that**; it comprises connection surface (740), which is positioned on the said connection component (720), and on which the connection shaft (700) is connected with the magnetic wing (600).

7. Externally actuated electrical energy production mechanism according to any one of the above claims, and it is **characterized in that**; the front cover (400) comprises space (410) which reduce the pressure that the said front cover (400) forms on the first ball bearing (420).

8. Externally actuated electrical energy production mechanism according to any one of the above claims, and it is **characterized in that**; the rear cover (500) comprises space (510) which reduce the pressure that the said rear cover (500) forms on the first ball bearing (520).

9. Externally actuated electrical energy production mechanism according to any one of the above claims, and it is **characterized in that**; support component (730) which reduce the pressure that the magnetic wings (600) form on the connection component (720), which is positioned on the said connection shaft (700), and which is connected with the connection component (720).
